# EUROPEAN PATENT APPLICATION

(11) **EP 4 593 334 A1**
(43) Date of publication of application: **30.07.2025**
(21) Application number: 22959040.1
(22) Date of filing: 20.09.2022
(51) Int. Cl.: H04L 27/00

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: MAO, Yuxin, Beijing 100085 (CN); WU, Jinhua, Beijing 100085 (CN); SHEN, Yang, Beijing 00085 (CN)
(74) Representative: Dehns Germany Partnerschaft mbB
(86) International application number: PCT/CN2022/120001
(87) International publication number: WO 2024/060028

(57) **Abstract**

Provided in the embodiments of the present disclosure are an information processing method and apparatus, and a communication device and a storage medium, wherein the information processing method is executed by a UE. The method comprises: sending request information to a core network device, the request information comprising event indication information, wherein the event indication information is used for indicating loss of satellite access coverage.

## Description

### TECHNICAL FIELD

The present disclosure relates to, but is not limited to, the field of wireless communication technology, particularly to an information processing method and apparatus, a communication device, and a storage medium.

### BACKGROUND

Currently, if a user equipment (UE) accesses a 5G core (5GC) network via a satellite access network, when the satellite access network provides non-continuous coverage to an area where the UE is located, in order to avoid unnecessary energy consumption caused by the UE continuing to search for cells and so on during a time period of no-signal coverage, a power-saving mechanism needs to be introduced in the time period of no-signal coverage to make the UE enter a dormant state for saving power in the time period of no-signal coverage. For example, the satellite access network provides the non-continuous coverage to the area where the UE is located due to factors such as the satellite type (e.g., non-terrestrial synchronization type), the number of satellites, and the satellite beam limitation. When the area where the UE is located is again provided with signal coverage of the satellite access, the UE exits the power-saving state in order to access the network to conduct services.

In the prior art, a radio access network (RAN) device, such as a base station, etc., is informed of the satellite coverage information and/or the ephemeris information, etc., and can send the satellite coverage information and/or the ephemeris information, etc. to the UE; and based on such information and the location information of the UE, etc., the RAN device can determine when the UE is about to lose the coverage of the satellite network and/or when the UE is about to be provided with the coverage of the satellite network again. Therefore, when the UE or the RAN device determines that the UE is about to lose the coverage of the satellite network, the core network device may be triggered, through a registration update process or a connection release process, etc., to complete the formulation of the power-saving parameter.

However, in view of factors such as security or signaling load, if the UE triggers, when the RAN device or the UE does not provide the satellite coverage and/or the ephemeris information, etc. to the core network device, initiation of a process such as the registration update because of the impending loss of the satellite coverage, the core network device cannot know whether the registration update process initiated by the UE is triggered due to the loss of the satellite signal, and thus will not formulate the power-saving parameter for the UE due to the loss of the coverage of the satellite signal.

### SUMMARY

Embodiments of the present disclosure provide an information processing method and apparatus, a communication device, and a storage medium.

According to a first aspect of the embodiments of the present disclosure, there is provided an information processing method, performed by a UE, including:
sending request information to a core network device, where the request information includes event indication information, and the event indication information is used for indicating satellite access coverage loss.

In some embodiments, the request information is one of:
a registration update request;
a tracking area update request; and
a connection release request.

In some embodiments, sending the request information to the core network device includes at least one of:
sending, based on prediction of the satellite access coverage loss, the request information to the core network device.

In some embodiments, the method includes receiving response information sent by the core network device, where the response information includes a power-saving parameter; where the response information is one of:
a registration update response;
a tracking area update response; and
a connection release response.

In some embodiments, the method includes receiving a user configuration update message sent by the core network device, where the user configuration update message includes a power-saving parameter.

In some embodiments, the core network device is an access and mobility management function (AMF) or a mobility management entity (MME).

According to a second aspect of the embodiments of the present disclosure, there is provided an information processing method, performed by an access network device, including:
obtaining request information, where the request information includes event indication information, and the event indication information is used for indicating satellite access coverage loss; and
sending the request information to a core network device.

In some embodiments, obtaining the request information includes:
generating the request information; or
receiving the request information sent by a UE.

In some embodiments, the request information is a connection release request.

In some embodiments, sending the request information to the core network device includes sending, based on prediction of the satellite access coverage loss, the request information to the core network device.

In some embodiments, the method includes receiving response information sent by the core network device, where the response information includes a power-saving parameter, and the response information is a connection release response.

In some embodiments, the method includes sending the response information to a UE.

In some embodiments, the method includes:
receiving a user configuration update message sent by the core network device, where the user configuration update message includes a power-saving parameter; and
sending the user configuration update message to a UE.

In some embodiments, the core network device is an AMF or an MME.

According to a third aspect of the embodiments of the present disclosure, there is provided an information processing method, performed by a core network device, including:
receiving request information sent by a UE, where the request information includes event indication information, and the event indication information is used for indicating satellite access coverage loss; and
determining a power-saving parameter based on the event indication information.

In some embodiments, the request information is one of:
a registration update request;
a tracking area update request; and
a connection release request.

In some embodiments, determining the power-saving parameter includes:
determining the power-saving parameter based on satellite coverage information and/or information about location where the UE is located.

In some embodiments, the method includes sending response information to the UE, where the response information includes the power-saving parameter; and
the response information is one of:
a registration update response;
a tracking area update response; and
a connection release response.

In some embodiments, the method includes sending a user configuration update message to the UE, where the user configuration update message includes the power-saving parameter.

In some embodiments, the core network device includes one of an AMF and an MME.

According to a fourth aspect of the embodiments of the present disclosure, there is provided an information processing apparatus, including:
a sending module, configured to send request information, where the request information includes event indication information, and the event indication information is used for indicating satellite access coverage loss.

In some embodiments, the request information is one of:
a registration update request;
a tracking area update request; and
a connection release request.

In some embodiments, the sending module is configured to send, based on prediction of the satellite access coverage loss, the request information to the core network device.

In some embodiments, the apparatus includes a receiving module configured to receive response information sent by the core network device, where the response information includes a power-saving parameter;
where the response information is one of:
a registration update response;
a tracking area update response; and
a connection release response.

In some embodiments, the apparatus includes a receiving module configured to receive a user configuration update message sent by the core network device, where the user configuration update message includes a power-saving parameter.

In some embodiments, the core network device includes at least one of an AMF and an MME.

According to a fifth aspect of the embodiments of the present disclosure, there is provided an information processing apparatus, including:
a receiving module, configured to obtain request information, where the request information includes event indication information, and the event indication information is used for indicating satellite access coverage loss; and
a sending module, configured to send the request information to a core network device.

In some embodiments, the receiving module is configured to generate the request information; or
the receiving module is configured to receive the request information sent by a UE.

In some embodiments, the request information is a connection release request.

In some embodiments, the sending module is configured to send, based on prediction of the satellite access coverage loss, the request information to the core network device.

In some embodiments, the apparatus includes a receiving module configured to receive response information sent by the core network device, where the response information includes a power-saving parameter, and the response information is a connection release response.

In some embodiments, the sending module is configured to send the response information to a UE.

In some embodiments, the receiving module is configured to receive a user configuration update message sent by the core network device, where the user configuration update message includes a power-saving parameter; and
the sending module is configured to send the user configuration update message to a UE.

In some embodiments, the core network device is an AMF or an MME.

According to a sixth aspect of the embodiments of the present disclosure, there is provided an information processing apparatus, including:
a receiving module, configured to receive request information, where the request information includes event indication information, and the event indication information is used for indicating satellite access coverage loss; and
a processing module, configured to determine a power-saving parameter based on the event indication information.

In some embodiments, the request information is one of:
a registration update request;
a tracking area update request; and
a connection release request.

In some embodiments, the processing module is configured to determine the power-saving parameter based on satellite coverage information and/or information about location where the UE is located.

In some embodiments, the apparatus includes a sending module configured to send response information to the UE, where the response information includes the power-saving parameter; and the response information is one of:
a registration update response;
a tracking area update response; and
a connection release response.

In some embodiments, the apparatus includes a sending module configured to send a user configuration update message to the UF, where the user configuration update message includes the power-saving parameter.

In some embodiments, the core network device includes one of an AMF and an MME.

According to a seventh aspect of the embodiments of the present disclosure, there is provided a communication device, where the communication device includes:
a processor; and
a memory, configured to store an executable instruction of the processor;
where the processor, when running the executable instruction, is configured to implement the information processing method of any embodiment of the present disclosure.

According to an eighth aspect of the embodiments of the present disclosure, there is provided a computer storage medium, where the computer storage medium stores an executable program of a computer, and the executable program, when executed by a processor, implements the information processing method of any embodiment of the present disclosure.

According to a ninth aspect of the embodiments of the present disclosure, there is provided an information processing system, including a UE, an access network device and a core network device; where the UE is configured to perform the information processing method applied to the UE; the access network device is configured to perform the information processing method applied to the access network device; and the core network device is configured to perform the information processing method applied to the core network device.

The technical solution provided by the embodiments of the present disclosure can include the following beneficial effects.

In the embodiments of the present disclosure, the request information can be sent to the core network device via the UE, where the request information includes the event indication information, and the event indication information is used for indicating the satellite access coverage loss. In this way, the core network device can be explicitly notified of the satellite coverage loss (i.e., the UE is about to lose the signal coverage of the satellite access network) via the UE, which is beneficial for the core network device to formulate the power-saving parameter and the like for the UE when the UE is about to lose the signal coverage of the satellite access network.

It should be understood that the above general description and the later detailed description are merely exemplary and explanatory, and cannot limit the embodiments of the present disclosure.

### BRIEF DESCRIPTION OF THE DRAWINGS

FIG. 1 is a schematic diagram of a structure of a wireless communication system illustrated according to an exemplary embodiment.
FIG. 2 is a schematic diagram of an information processing method illustrated according to an exemplary embodiment.
FIG. 3 is a schematic diagram of an information processing method illustrated according to an exemplary embodiment.
FIG. 4 is a schematic diagram of an information processing method illustrated according to an exemplary embodiment.
FIG. 5 is a schematic diagram of an information processing method illustrated according to an exemplary embodiment.
FIG. 6 is a schematic diagram of an information processing method illustrated according to an exemplary embodiment.
FIG. 7 is a schematic diagram of an information processing method illustrated according to an exemplary embodiment.
FIG. 8 is a schematic diagram of an information processing method illustrated according to an exemplary embodiment.
FIG. 9 is a schematic diagram of an information processing method illustrated according to an exemplary embodiment.
FIG. 10 is a schematic diagram of an information processing method illustrated according to an exemplary embodiment.
FIG. 11 is a block diagram of an information processing apparatus illustrated according to an exemplary embodiment.
FIG. 12 is a block diagram of an information processing apparatus illustrated according to an exemplary embodiment.
FIG. 13 is a block diagram of an information processing apparatus illustrated according to an exemplary embodiment.
FIG. 14 is a block diagram of an information processing apparatus illustrated according to an exemplary embodiment.
FIG. 15 is a block diagram of a UE illustrated according to an exemplary embodiment.
FIG. 16 is a block diagram of a base station illustrated according to an exemplary embodiment.

### DETAILED DESCRIPTION

The exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the embodiments of the present disclosure. On the contrary, they are only examples of devices and methods consistent with some aspects of the embodiments of the present disclosure as detailed in the appended claims.

The terms used in the embodiments of the present disclosure are used solely for the purpose of describing particular embodiments, but are not intended to limit the embodiments of the present disclosure. The singular forms of "a" and "the" used in the embodiments of the present disclosure and the appended claims are also intended to include the plural form, unless the context clearly indicates other meanings. It should also be understood that the term "and/or" as used in this article refers to and includes any or all possible combinations of one or more of the associated listed items.

It should be understood that although the terms first, second, third, etc. may be used in the embodiments of the present disclosure to describe various types of information, such information should not be limited to these terms. These terms are only used to distinguish the same type of information from one another. For example, without departing from the scope of the embodiments of the present disclosure, the first information may also be referred to as the second information, and similarly, the second information may also be referred to as the first information. Depending on the context, the phrase "if" as used herein may be interpreted as "at the time of......", "when ......", or "in response to determining".

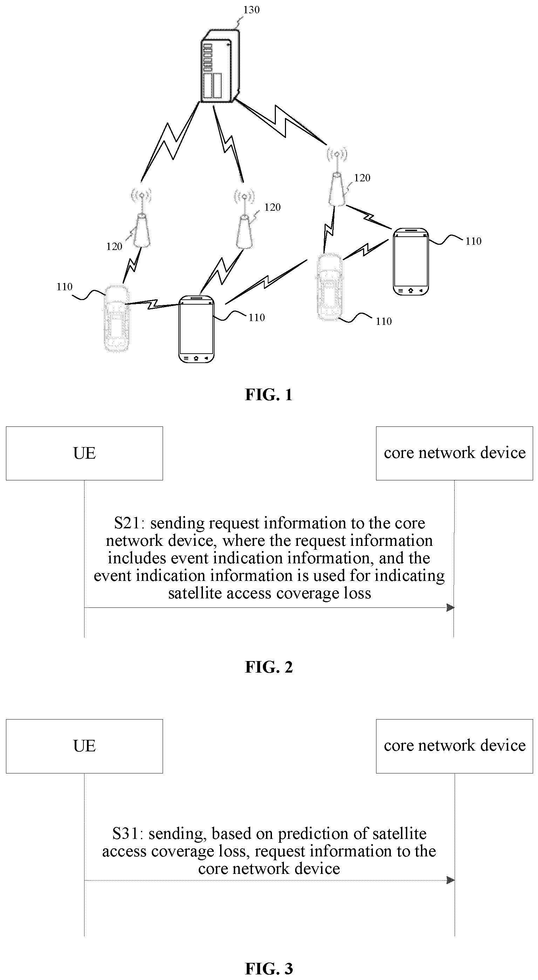

Referring to FIG. 1, a schematic diagram of a structure of a wireless communication system provided in an embodiment of the present disclosure is shown. As shown in FIG. 1, the wireless communication system is a communication system based on the cellular mobile communication technology, and the wireless communication system may include one or more UEs 110, and one or more base stations 120.

In some embodiments, the UE 110 may refer to a device that provides voice and/or data connectivity to a user. The UE 110 may communicate with one or more core networks via an RAN. The UE 110 may be an IoT user device, such as a sensor device, a mobile phone (or referred to as a cellular phone), or a computer with an IoT user device. For example, the UE 110 may be a fixed, portable, pocket, handheld, computer built-in, or vehicle-mounted device. For example, the UE 110 may be a station (STA), a subscriber unit, a subscriber station, a mobile station, a mobile, a remote station, an access point, a remote user device (remote terminal), an access user device (access terminal), a user terminal, a user agent, a user device, or a user equipment. Or, the UE 110 may be a device of an unmanned aerial vehicle. Or, the UE 110 may be a vehicle-mounted device, such as a trip computer with wireless communication functions, or a wireless user device externally connected to a trip computer. Or, the UE 110 may be a road side device, such as a street light, a signal light, or other road side devices with wireless communication functions.

The base station 120 may be a network side device in the wireless communication system. In some embodiments, the wireless communication system may be the 4th generation mobile communication (4G) system, also referred to as the long term evolution (LTE) system. Or, the wireless communication system may be a 5G system, also referred to as a new radio (NR) system or a 5G NR system. Or, the wireless communication system may be a next generation system of the 5G system. In some embodiments, the access network in the 5G system may be referred to as a new generation-radio access network (NG-RAN).

In some embodiments, the base station 120 may be an evolved base station (eNB) used in a 4G system. Or, the base station 120 may be a base station (gNB) with a centralized distributed architecture in a 5G system. When adopting the centralized distributed architecture, the base station 120 typically includes a central unit (CU) and at least two distributed units (DUs). The central unit is provided with a protocol stack of a packet data convergence protocol (PDCP) layer, a radio link control (RLC) layer, and a medium access control (MAC) layer. The distributed unit is provided with a protocol stack of a physical (PHY) layer. The embodiments of the present disclosure do not limit the specific implementations of the base station 120.

A wireless connection may be established between the base station 120 and the UE 110 via a wireless air interface. In a different embodiment, the wireless air interface is a wireless air interface based on a fourth generation mobile communication network technology (4G) standard. Or, the wireless air interface is a wireless air interface based on a fifth generation mobile communication network technology (5G) standard, for example, the wireless air interface is a new air interface. Or, the wireless air interface may also be a wireless air interface based on a next generation mobile communication network technology standard of the 5G.

In some embodiments, an end to end (E2E) connection may also be established between UEs 110, for example, in scenarios such as vehicle to vehicle (V2V) communication, vehicle to infrastructure (V2I) communication, and vehicle to pedestrian (V2P) communication in the vehicle to everything (V2X) communication.

Herein, the above-described UE may be considered as the terminal device in the following embodiments.

In some embodiments, the above-described wireless communication system may further include a network management device 130.

One or more base stations 120 are connected to the network management device 130 respectively. In some embodiments, the network management device 130 may be a core network device in the wireless communication system, for example, the network management device 130 may be a mobility management entity (MME) in the evolved packet core (EPC). Alternatively, the network management device may also be other core network devices, such as a service gateway (SGW), a public data network gateway (PGW), a policy and charging rules function (PCRF), or a home subscriber server (HSS). Or, the core network device may also be a core network devices in the 5G, such as an access and mobility management function (AMF), a policy control function (PCF), or a session management function (SMF). The implementation forms of the network management device 130 are not limited in the embodiments of the present disclosure.

In order to facilitate the understanding of those skilled in the art, the embodiments of the present disclosure enumerate a plurality of embodiments to provide a clear description of the technical solutions of the embodiments of the present disclosure. Of course, those skilled in the art can understand that the plurality of embodiments provided by the embodiments of the present disclosure may be performed individually or in combination with the methods of other embodiments in the embodiments of the present disclosure, or may be performed individually or in combination with some methods of other related arts. The embodiments of the present disclosure do not limit this.

In order to better understand the technical solution described in any of the embodiments of the present disclosure, a partial description in the related art is firstly provided.

In some application scenarios, a mobility registration update process is triggered when at least one of the following conditions is satisfied:
when the UE moves to a tracking area (TA) outside a registration area (RA);
the UE needs to negotiate its own capability and/or the protocol parameter with the network through the registration process; and
the preferred network behavior of the UE is changed, and the network behavior that the UE and the AMF provide and both the UE and the AMF can support is incompatible.

When the mobility registration update process is applied to triggering the network to formulate the power-saving parameter in the satellite non-continuous coverage scenario, although the triggering condition of the mobility registration update process may be added at the UE side to enable the UE to trigger the initiation of the mobility registration update process when the UE is about to lose the satellite network coverage; however, according to the existing mobility registration update process, the core network device cannot know that the mobility registration update process is triggered due to the non-continuous coverage of the satellite access, and thus may not formulate the power-saving parameter for the UE.

Similarly for the connection release process initiated by the RAN device, the RAN device triggers the initiation of the connection release process when the RAN device detects that the UE is about to lose the satellite network coverage; however, the core network device cannot know that the connection release process is triggered by the non-continuous coverage of the satellite access, and thus may not formulate the power-saving parameter for the UE when the core network device receives the connection release request.

The above problem is due to the fact that the RAN device or the UE does not provide the ephemeris information and/or the satellite coverage information to the core network device for security or signaling load reasons. Herein, the core network device may obtain the ephemeris information and/or the satellite coverage information from a satellite operator management platform, or may obtain the ephemeris information and/or the satellite coverage information from a network data analytics function (NWDAF).

As such, the embodiments of the present disclosure may explicitly notify, via the UE or the access network device (e.g., the RAN device), the core network device that the satellite coverage is about to be lost (i.e., the UE is about to lose the coverage of the satellite network signal), thereby realizing that the core network device performs the power-saving parameter for the UE and provides the power-saving parameter to the UE when the UE is about to lose the satellite access coverage.

As shown in FIG. 2, the embodiments of the present disclosure provide an information processing method that is performed by a UE and includes step S21.

At step S21, request information is sent to a core network device, where the request information includes event indication information, and the event indication information is used for indicating satellite access coverage loss.

Herein, the event indication information is used for the core network device to determine the power-saving parameter. The event indication information may also be used for other related operations that is realizable.

In an embodiment, the request information may be used for requesting the power-saving parameter.

Herein, the satellite access coverage loss may be that the UE loses the coverage of the satellite network signal; or the satellite access coverage loss may be that the UE is in non-continuous satellite coverage; or the satellite access coverage loss may be that the UE is in no satellite signal coverage.

Herein, the core network device may be a logical node, a network element or a function, etc. that can be flexibly deployed in the communication network. For example, the core network device may be an AMF, an MME, or other core network devices.

Herein, the UE may be various mobile terminals or fixed terminals. For example, the UE may be, but is not limited to, a cell phone, a computer, a server, a wearable device, a vehicle-mounted terminal, a road side unit (RSU), a game control platform, or a multimedia device, etc.

In an embodiment, sending the request information to the core network device in step 21 may be: sending the request information to the core network device via an access network device.

Herein, one implementation for the UE to send the request information to the core network device via the access network device is that the UE sends the request information to the access network device, and the access network device sends the request information to the core network device.

Herein, the access network device may be a logical node, a network element or a function, etc. that can be flexibly deployed in the communication network. For example, the access network device may be the RAN device in the above embodiments. The access network device may be, but is not limited to, a base station. Herein, the base station may be, but is not limited to, one of the following: a 3G base station, a 4G base station, a 5G base station, and other evolved base stations.

In an embodiment, the request information may be, but is not limited to, at least one of the following: a registration update request, a tracking area update request, and a connection release request. Herein, the registration update request may be a mobility registration update request. The connection release request may be an access network (AN) connection release request or an S1 connection release request.

In an embodiment, the power-saving parameter may be, but is not limited to being, indicative of at least one of the following: a start time for the UE to enter a power-saving state, an end time for the UE to exit the power-saving state, a duration for the UE to be in the power-saving state, a periodic timing time for the UE to be in the power-saving state, a discontinuous reception (DRX) parameter of the UE, an extended discontinuous reception (eDRX) parameter of the UE, and a terminal initiated connection only (MICO) mode parameter. The MICO mode parameter includes an active time of the MICO.

In the embodiments of the present disclosure, the request information can be sent to the core network device via the UE, where the request information includes request of the event indication information; and the event indication information is used for indicating the satellite access coverage loss, and the event indication information is used for the core network device to determine the power-saving parameter. In this way, the core network device can be explicitly notified of the satellite coverage loss (i.e., the UE is about to lose the signal coverage of the satellite access network) via the UE, which is beneficial for the core network device to formulate the power-saving parameter and the like for the UE when the UE is about to lose the signal coverage of the satellite access network.

Moreover, the embodiments of the present disclosure do not need to notify the core network device of the satellite coverage loss by including the location information and/or the satellite coverage information of the UE in the request. Thus, the location information and/or the satellite coverage information of the UE may be obtained via other network elements (e.g., NWDAF, etc.), eliminating the need to obtain the location information and/or the satellite coverage information of the UE via the UE. This avoids the need to rely on the UE or the access network device to provide the satellite coverage information to the core network due to the security or signaling load reasons, etc.

In addition, the embodiments of the present disclosure send one of the registration update request, the tracking area update request, and the connection release request including the event indication information to the core network device. In this way, notifying the core network device of the satellite access coverage loss can be realized, enabling the core network device to formulate the power-saving parameter for the UE.

In some embodiments, step S21 includes sending, based on prediction of the satellite access coverage loss, the request information to the core network device.

As shown in FIG. 3, the embodiments of the present disclosure provide an information processing method that is performed by a UE and includes step S31.

At step S31, request information is sent to a core network device based on prediction of satellite access coverage loss.

In some embodiments, step S31 includes one of the following:
sending, based on the prediction of the satellite access coverage loss, a registration update request to the core network device, where the registration update request includes event indication information;
sending, based on the prediction of the satellite access coverage loss, a tracking area update request to the core network device, where the tracking area update request includes the event indication information; and
sending, based on the prediction of the satellite access coverage loss, a connection release request to the core network device, where the connection release request includes the event indication information.

The embodiments of the present disclosure provide an information processing method that is performed by a UE and includes:
sending, based on the prediction of the satellite access coverage loss, the registration update request to the core network device, where the registration update request includes the event indication information; or, sending, based on the prediction of the satellite access coverage loss, the tracking area update request to the core network device, where the tracking area update request includes the event indication information; or, sending, based on the prediction of the satellite access coverage loss, the connection release request to the core network device, where the connection release request includes the event indication information.

In some embodiments of the present disclosure, the core network device may be the core network device in step S21. For example, the core network device may be an AMF or an MME.

In some embodiments of the present disclosure, the interaction between the UE and the core network device may be performed via an access network device. For example, sending, by the UE, the registration update request to the core network device may be that the UE sends the registration update request to the access network device, where the registration update request is used for being sent by the access network device to the core network device. As another example, sending, by the UE, the tracking area update request to the core network device may be that the UE sends the tracking area update request to the access network device, where the tracking area update request is used for being sent by the access network device to the core network device. As another example, sending, by the UE, the connection release request to the core network device may be that the UE sends the connection release request to the access network device, where the connection release request is used for being sent by the access network device to the core network device.

In some embodiments of the present disclosure, the registration update request, the tracking area update request, and the connection release request may be the registration update request, the tracking area update request, and the connection release request in the above embodiments respectively. For example, the registration update request may be a mobility registration update request; and/or the connection release request may be an access network connection release request.

Herein, the prediction of the satellite access coverage loss in step S31 may be replaced by impending loss of the satellite access coverage. For example, the UE may determine, based on the location information of the UE and/or the ephemeris information, etc., that the UE will lose the satellite access coverage at a first time; then it may be determined that the impending loss of the satellite access coverage is considered to be at a second time prior to the first time. The difference value between the second time and the first time is within a predetermined time range.

In the embodiments of the present disclosure, when the UE predicts the satellite access coverage loss, the UE sends the request information including the event indication information to the core network device. In this way, the core network device is explicitly notified when the satellite is about to lose the satellite access coverage, enabling the core network device to formulate the power-saving parameter for the UE when the UE is about to lose the satellite access coverage. This can facilitate the UE to obtain the power-saving parameter in time, which enables the UE to enter the power-saving state when the UE loses the satellite access coverage.

It should be noted that those skilled in the art can understand that the methods provided in the embodiments of the present disclosure may be performed individually or in combination with some methods in the embodiments of the present disclosure or some methods in the related arts.

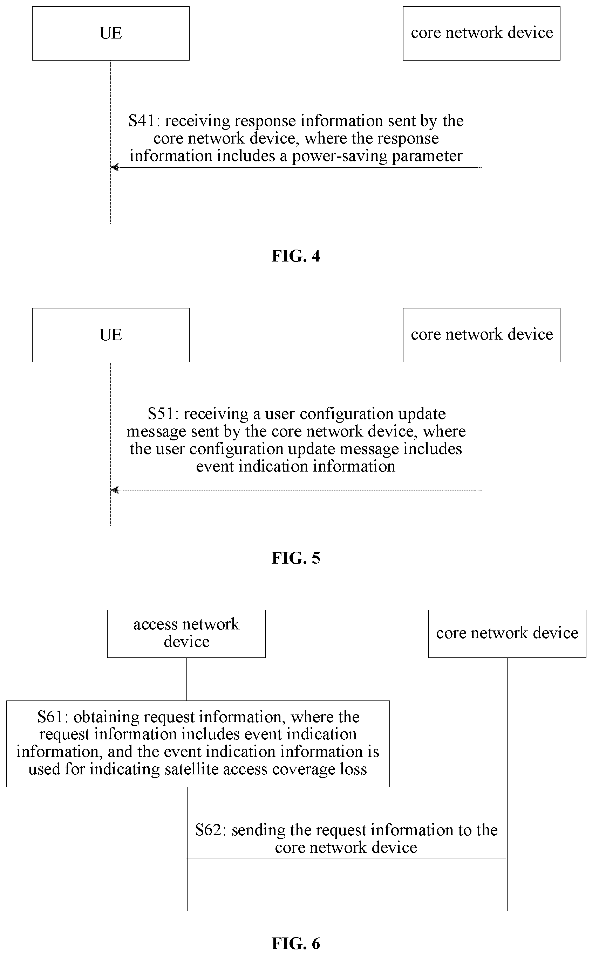

As shown in FIG. 4, the embodiments of the present disclosure provide an information processing method that is performed by a UE and includes step S41.

At step S41, response information sent by a core network device is received, where the response information includes a power-saving parameter.

In an embodiment, receiving the response information sent by the core network device in step S51 may be: receiving, via an access network device, the response information sent by the core network device. Herein, receiving, by the UE via the access network device, the response information sent by the core network may be that the UE receives the response information sent by the access network device, where the response information is sent by the access network device after the access network device receives the response information sent by the core network device.

In some embodiments of the present disclosure, the UE and the core network device are the UE and the core network device in step S21 respectively; and the power-saving parameter and the event indication information may be the power-saving parameter and the event indication information in step S21.

In an embodiment, the response information includes one of the following: a registration update response, a tracking area update response, and a connection release response.

For example, the UE receives the registration update response sent by the core network device, where the registration update response includes the power-saving parameter; or, the UE receives the tracking area update response sent by the core network device, where the tracking area update request includes the power-saving parameter; or, the UE receives the connection release request sent by the core network device, where the connection release request includes the power-saving parameter.

In an embodiment of the present disclosure, the UE may obtain, through at least one of the registration update response, the tracking area update response and the connection release response, the power-saving parameter formulated by the core network device for the UE, facilitating the UE to be in the power-saving state and/or exit the power-saving state at an appropriate time based on the power-saving parameter, which thereby can give consideration to the reduction of the energy consumption of the UE and the ensuring of the normal conduct of services between the UE and the network, etc.

As shown in FIG. 5, the embodiments of the present disclosure provide an information processing method that is performed by a UE and includes step S51.

At step S51, a user configuration update message sent by a core network device is received, where the user configuration update message includes event indication information.

In some embodiments of the present disclosure, the UE and the core network device are the UE and the core network device in step S21 respectively; and the power-saving parameter and the event indication information may be the power-saving parameter and the event indication information in step S21.

In an embodiment, receiving the user configuration update message sent by the core network device may be: receiving, via an access network device, the user configuration message sent by the core network device. Herein, receiving, by the UE via the access network device, the user configuration message sent by the core network device may be that the UE receives the user configuration message sent by the access network device, where the user configuration message is sent by the access network device after the access network device receives the user configuration message sent by the core network device.

In an embodiment, the user configuration update message is used for the UE to update the power-saving parameter.

In the embodiments of the present disclosure, the UE can obtain, through the user configuration update message, the power-saving parameter formulated by the core network device for the UE, facilitating the UE to be in the power-saving state at an appropriate time based on the power-saving parameter, which thereby can give consideration to the reduction of the energy consumption of the UE and the ensuring of the normal conduct of services between the UE and the network, etc.

It should be noted that those skilled in the art can understand that the methods provided in the embodiments of the present disclosure may be performed individually or in combination with some methods in the embodiments of the present disclosure or some methods in the related arts.

The following information processing method is performed by an access network device, and is similar to the above description of the information processing method performed by the UE; and for technical details not disclosed in the embodiments of the information processing method performed by the access network device, please refer to the description of the examples of the information processing method performed by the UE, which will not be described and illustrated in detail herein.

As shown in FIG. 6, the embodiments of the present disclosure provide an information processing method that is performed by an access network device and includes steps S61 to S62.

At step S61, request information is obtained, where the request information includes event indication information, and the event indication information is used for indicating satellite access coverage loss.

At step S62, the request information is sent to a core network device.

Herein, the event indication information is used for the core network device to determine a power-saving parameter. Herein, the request information is used for requesting the power-saving parameter.

In some embodiments of the present disclosure, the core network device may be the core network device in step S21; the request information, the event indication information, and the power-saving parameter may be the request information, the event indication information, and the power-saving parameter in step S21 respectively.

For example, the core network device may be an AMF, an MMF, or other core network devices.

For example, the request information may be one of the following: a registration update request, a tracking area update request, a connection release request.

In an embodiment, obtaining the request information in step S61 includes generating the request information. Herein, the request information is a connection release request.

For example, the access network device determines a connection release request, where the connection release request includes the event indication information; and the access network device sends the connection release request to the core network device. In this way, the access network device can take the initiative in generating the connection release request including the event indication information, and send the request information to the core network device. This is applicable to scenarios where the access network device takes the initiative in initiating the connection release request.

In another embodiment, obtaining the request information in step S61 includes receiving the request information sent by a UE. Herein, the request information may be that the access network device receives the connection release request, the registration update request, or the tracking area update request sent by the UE.

For example, the access network device receives the request information sent by the UE, where the request information includes the event indication information. The request information may be the registration update request, the tracking area update request or the connection release request. The access network device sends the request information to the core network device. In this way, the access network device can receive the request information including the event indication information sent by the UE, and forward the request information to the core network device. This is applicable to scenarios where the UE initiates the registration update request, the tracking area update request or the connection release request.

The embodiments of the present disclosure provide an information processing method that is performed by the access network device and includes:
receiving response information sent by the core network device, where the response message includes the power-saving parameter, and the response information is one of the following: a registration update response, a tracking area update response, a connection release response.

The embodiments of the present disclosure provide an information processing method that is performed by the access network device and includes:
sending the response information to the UE, where the response information includes the power-saving parameter.

For example, the access network device receives the registration update request sent by the core network device, where the registration update request includes the power-saving parameter; and the core network device sends the registration update request to the UE. Or, the access network device receives the tracking area update request sent by the core network device, where the tracking area update request includes the power-saving parameter; and the core network device sends the tracking area update request to the UE. Or, the access network device receives the connection release request sent by the core network device, where the connection release request includes the power-saving parameter; and the access network device sends or does not send the connection release request to the UE.

The embodiments of the present disclosure provide an information processing method that is performed by the access network device and includes:
receiving a user configuration update message sent by the core network device, where the user configuration update message includes the power-saving parameter; and
sending the user configuration update message to the UE.

In some embodiments of the present disclosure, the user configuration update message is the user configuration update message in the above embodiments. For example, the user configuration update message is used for the UE to update the power-saving parameter.

In an embodiment, step S62 may be: sending, based on prediction of the satellite access coverage loss, the request information to the core network device.

The embodiments of the present disclosure provide an information processing method that is performed by the access network device and includes: sending, based on the prediction of the satellite access coverage loss, the request information to the core network device.

The above embodiments, which can be referred to the description at the UE side for details, will not be repeated herein.

It should be noted that those skilled in the art can understand that the methods provided in the embodiments of the present disclosure may be performed individually or in combination with some methods in the embodiments of the present disclosure or some methods in the related arts.

The following information processing method is performed by a core network device and is similar to the above description of the information processing method performed by the UE and/or the access network device; and for technical details not disclosed in the embodiments of the information processing method performed by the core network device, please refer to the description of the examples of the information processing method performed by the UE and/or the access network device, which will not be described and illustrated in detail herein.

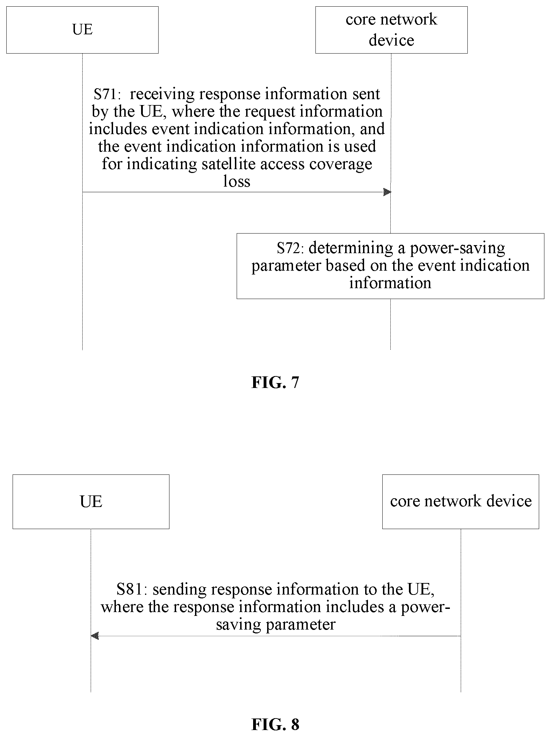

As shown in FIG. 7, the embodiments of the present disclosure provide an information processing method that is performed by a core network device and includes steps S71 and S72.

At step S71, request information sent by a UE is received, where the request information includes event indication information, and the event indication information is used for indicating satellite access coverage loss.

At step S72, a power-saving parameter is determined based on the event indication information.

In some embodiments of the present disclosure, the UE, the core network device, and the access network device involved hereinafter may be the UE, the core network device, and the access network device in the above embodiments respectively; the request information may be the request information in step S21; and the power-saving parameter may be the power-saving parameter in step S21.

For example, the core network device may be an AMF, an MMF or other core network devices.

For example, the request information may be, but is not limited to, one of the following: a registration update request, a tracking area update request, and a connection release request. Herein, the registration update request may be a mobility registration update request. The connection release request may be an AN connection release request.

For example, the power-saving parameter may be, but is not limited to being, indicative of at least one of the following: a start time for the UE to enter a power-saving state, an end time for the UE to exit the power-saving state, a duration for the UE to be in the power-saving state, a periodic timing time for the UE to be in the power-saving state, a DRX parameter of the UE, an eDRX parameter of the UE, and an MICO mode parameter.

In an embodiment, step S71 may be: receiving, via an access network device, the request information sent by the UE. Herein, receiving, by the core network device via the access network device, the request information sent by the UE may be that: the core network device receives the request information sent by the access network device, where the request information is sent by the UE.

In an embodiment, the request information is sent by the UE based on prediction of the satellite access coverage loss.

In an embodiment, receiving the request information sent by the UE in S61 includes one of the following:
receiving the registration update request sent by the UE, where the registration update request includes the event indication information;
receiving the tracking area update request sent by the UE, where the tracking area update request includes the event indication information; and
receiving the connection release request sent by the UE, where the connection release request includes the event indication information.

The embodiments of the present disclosure provide a power-saving parameter that is performed by the core network device and includes: receiving, via the access network device, the registration update area update request sent by the UE, where the registration update area update request includes the event indication information; or, receiving, via the access network device, the tracking area update request sent by the UE, where the tracking area update request includes the event indication information; or, receiving, via the access network device, the connection release request sent by the UE, where the connection release request includes the event indication information.

Herein, the registration update request may be sent by the UE when the UE predicts the satellite access coverage loss. The tracking area update request may be sent by the UE when the UE predicts the satellite access coverage loss. The connection release request may be sent by the UE when the UE predicts the satellite access coverage loss.

The above embodiments, which can be referred to the description at the UE side, will not be repeated herein.

It should be noted that those skilled in the art can understand that the methods provided in the embodiments of the present disclosure may be performed individually or in combination with some methods in the embodiments of the present disclosure or some methods in the related arts.

In an embodiment, determining the power-saving parameter in step S72 includes: determining the power-saving parameter based on satellite coverage information and/or information about location where the UE is located.

The embodiments of the present disclosure provide an information processing method that is performed by the core network device and includes: determining the power-saving parameter based on the satellite coverage information and/or the information about location where the UE is located.

The embodiments of the present disclosure provide an information processing method that is performed by the core network device and includes: determining, based on the request information including the event indication information, the power-saving parameter according to the satellite coverage information and/or the information about location where the UE is located.

In an embodiment, the satellite coverage information may be, but is not limited to, a satellite coverage duration and/or a satellite non-coverage duration. Herein, the satellite coverage duration may be a duration during which an area is covered by the satellite network signal. The satellite coverage duration may also be a start time of the satellite network signal coverage and/or an end time of the satellite signal coverage. Herein, the satellite non-coverage duration may be a duration during which an area is not covered by the satellite network signal. The satellite non-coverage duration may also be a start time of no satellite network signal coverage and/or an end time of no satellite signal.

In another embodiment, the satellite coverage information may also be other information, and only needs to satisfy that the satellite coverage duration and/or the satellite non-coverage duration can be determined according to the satellite coverage information. No limitation is made on the satellite coverage information herein.

In an embodiment, the information about location where the UE is located may be, but is not limited to, at least one of the following: ephemeris information of the satellite to which the UE is accessed, location information of the UE, and movement trajectory information of the UE.

For example, the core network device may determine, based on the ephemeris information of the UE and the satellite coverage information, that the UE leaves the satellite network signal coverage at a third time and enters the satellite network signal coverage at a fourth time. In this way, the power-saving parameter that can be determined may be that the UE enters the power-saving state at the third time and exits the power-saving state at the fourth time.

In this way, in the embodiments of the present disclosure, when the UE loses access to the satellite coverage and/or re-enters the satellite coverage can be accurately determined through the satellite coverage information and/or the information about the location where the UE is located. Therefore, the appropriate power-saving parameter can be determined.

It should be noted that those skilled in the art can understand that the methods provided in the embodiments of the present disclosure may be performed individually or in combination with some methods in the embodiments of the present disclosure or some methods in the related arts.

As shown in FIG. 8, the embodiments of the present disclosure provide an information processing method that is performed by a core network device and includes step S81.

At step S81, response information is sent to a UE, where the response information includes a power-saving parameter.

In some embodiments of the present disclosure, the response information may be the response information in the above embodiments. For example, the response information may be one of the following: a registration update response, a tracking area update response, and a connection release response.

In some embodiments, step S81 includes one of the following:
sending the registration update response to the UE, where the registration update response includes the power-saving parameter;
sending the tracking area update response to the UE, where the tracking area update response includes the power-saving parameter; and
sending the connection release response to the UE, where the connection release response includes the power-saving parameter.

The embodiments of the present disclosure provide an information processing method that is performed by the core network device and includes one of the following:
sending, via an access network device, the registration update response to the UE, where the registration update response includes the power-saving parameter;
sending, via the access network device, the tracking area update response to the UE, where the tracking area update response includes the power-saving parameter; and
sending, via the access network device, the connection release response to the UE, where the connection release response includes the power-saving parameter.

For example, the core network device sends the registration update response to the access network device, where the registration update response includes the power-saving parameter. The registration update response is used for being sent by the access network device to the UE. Or, the core network device sends the tracking area update response to the access network device, where the tracking area update response includes the power-saving parameter. The tracking area update response is used for being sent by the access network device to the UE. Or, the core network device sends the connection release response to the access network device, where the connection release response includes the power-saving parameter. The connection release response is used for being sent by the access network device to the UE.

In an embodiment, the registration update response may be a mobility registration update response; and/or the connection release response may be an AN connection release response.

The embodiments of the present disclosure provide an information processing method that is performed by the core network device and includes sending a user configuration update message to the UE, where the user configuration update information includes the power-saving parameter.

The embodiments of the present disclosure provide an information processing method that is performed by the core network device and includes sending the user configuration update message to the UE via the access network device, where the user configuration update message includes the power-saving parameter.

For example, the core network device sends the user configuration update message to the access network device, where the user configuration update message includes the power-saving parameter. The user configuration update message is used for being sent to the UE by the access network device.

In an embodiment, the user configuration update message is used for the UE to update the power-saving parameter.

The above embodiments, which can be referred to the description at the UE side and/or the access network device side for details, will not be repeated herein.

It should be noted that those skilled in the art can understand that the methods provided in the embodiments of the present disclosure may be performed individually or in combination with some methods in the embodiments of the present disclosure or some methods in the related arts.

To further explain any embodiment of the present disclosure, several specific embodiments are provided below.

### Example I

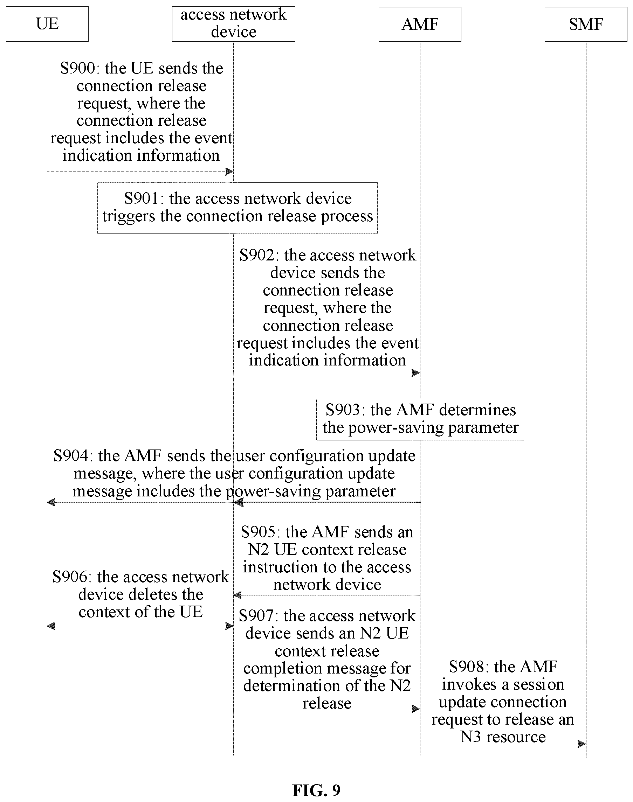

As shown in FIG. 9, the embodiments of the present disclosure provide an information processing method that is performed by a communication device, where the communication device may include a UE, an access network device, an AMF, and an SMF. The information processing method includes the following steps S900 to S908.

At step S900, the UE sends the connection release request, where the connection release request includes the event indication information.

The step S900 is optionally that the UE detects that the UE is about to leave the coverage of the satellite network signal, and requests a wireless connection release request by using an AS process. For example, the UE sends the connection release request to the access network device, where the connection release request includes the event indication information, and the event indication information is used for indicating the satellite access coverage loss. If step S900 is executed, step S902 is directly jumped to; and if step S900 step is not executed, it may be started from step S901.

At step S901, the access network device triggers the connection release process.

For example, the access network device detects, based on the satellite coverage information, that a UE in a connected state (such as a CM-connected state) is about to leave the coverage of the satellite network signal, and determines to trigger the connection release process (such as an N2 connection release process). In triggering the connection release process by the access network devices, the UE in the connected state (such as the CM-connected state) switches to an idle state (such as a CM-idle state) before entering a non-coverage area.

At step S902, the access network device sends the connection release request, where the connection release request includes the event indication information.

For example, the access network device sends an N2 UE context release request message to the AMF. The N2 UE context release request message includes a reason value. The reason value is used for indicating that the reason for the N2 UE context release request message is that the UE is leaving the coverage of the satellite network signal. Herein, the connection release request may be an N2 UE context release request message. The event indication information may be replaced by the reason value.

At step S903, the AMF determines the power-saving parameter.

For example, before performing N2 connection release, based on indication of the event indication information or based on indication of the reason value, the AMF obtains, from the NWDAF or the satellite operator management platform, the satellite coverage information and/or the information about location where the UE is located; and the AMF determines the power-saving parameter based on the satellite coverage information and/or the information about the location where the UE is located. The satellite coverage information may be derived from a satellite ephemeris and a satellite identification of the access network device. The power-saving parameter may be, but is not limited to, at least one of the following: a periodic registration timer, an active time of an MICO mode, and an eDRX parameter. Herein, to ensure that the UE is outside the coverage area of the satellite network signal, the UE is kept in the power-saving state, and no MO signaling is sent. The active time of the MICO may be used for keeping the UE reachable before the UE moves outside the coverage area of the satellite network signal.

At step S904, the AMF sends the user configuration update message, where the user configuration update message includes the power-saving parameter.

Herein, the user configuration update parameter may be used for the UE to update the power-saving parameter.

For example, the AMF sends the user configuration update message to the access network device, where the user configuration update message includes the power-saving parameter, and the access network device sends the user configuration update message to the UE.

At step S905, the AMF sends an N2 UE context release instruction to the access network device.

At step S906, the access network device deletes the context of the UE.

Herein, the access network device may request the UE to release the access network connection. When an access network connection release acknowledgement is received from the UE, the context of the UE is deleted.

At step S907, the access network device sends an N2 UE context release completion message for determination of the N2 release.

Herein, the N2 UE context may include, but is not limited to, a list of a PDU session ID of at least one of an N3 user plane, user location information, and an age of the location information.

At step S908, the AMF invokes a session update connection request to release an N3 resource.

For example, for each protocol data unit (PDU) session in the N2 UE context release completion, the AMF invokes a session update request (e.g., Nsmf_PDU session_UpdateSMContext) to release the N3 resource defined in clause 4.2.6 of TS 23.502.

In the above embodiment, the AMF may also be replaced by the MME, and at this time, no SMF is required.

### Example 2

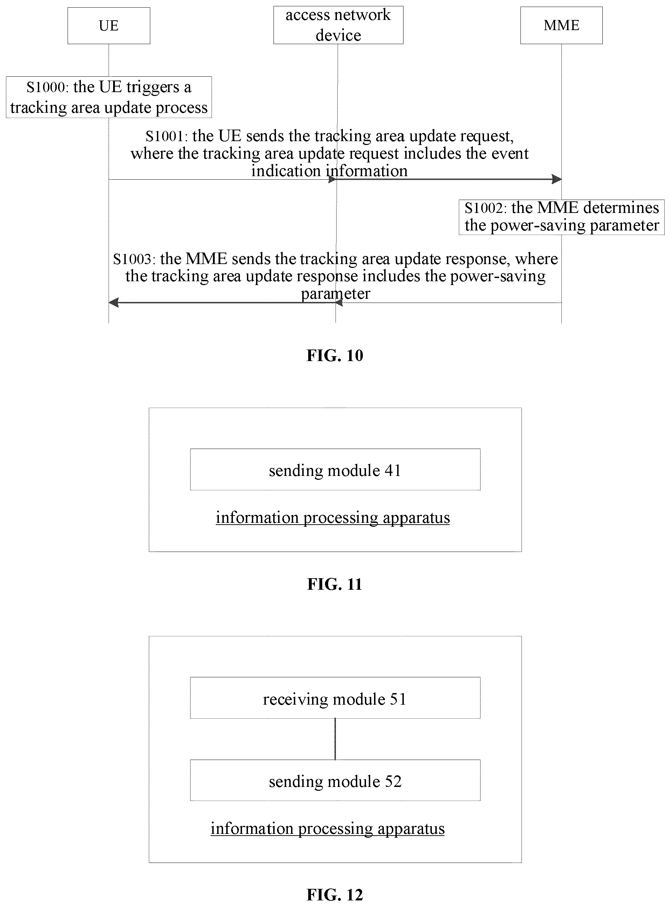

As shown in FIG. 10, the embodiments of the present disclosure provide an information processing method that is performed by a communication device, where the communication device may include a UE, an access network device and an MME. The information processing method includes the following steps S1000 to S1003.

At step S1000, the UE triggers a tracking area update process.

For example, the UE detects that the UE is about to leave the coverage of the satellite network signal, and triggers the tracking area update process to the MME.

At step S1001, the UE sends the tracking area update request, where the tracking area update request includes the event indication information.

For example, the UE sends to the access network device the tracking area update request including the event indication information; the access network device sends the tracking area update request to the MME; and the event indication information is used for indicating the satellite access coverage the, and the event indication information is used for the MME to determine a power-saving parameter.

At step S1002, the MME determines the power-saving parameter.

For example, based on indication of the event indication information, the MME obtains, from the NWDAF or the satellite operator management platform, the satellite coverage information and/or the information about location where the UE is located; and the MME determines the power-saving parameter based on the satellite coverage information and/or the information about the location where the UE is located. The satellite coverage information may be derived from a satellite ephemeris and a satellite identification of the access network device. The power-saving parameter may be, but is not limited to, at least one of the following: a periodic registration timer, an active time of an MICO mode, and an eDRX parameter. Herein, to ensure that the UE is outside the coverage area of the satellite network signal, the UE is kept in the power-saving state, and no MO signaling is sent. The active time of the MICO may be used for keeping the UE reachable before the UE moves outside the coverage area of the satellite network signal.

At step S1003, the MME sends the tracking area update response, where the tracking area update response includes the power-saving parameter.

For example, the MME sends the tracking area update response including the power-saving parameter to the access network device; and the access network device sends the tracking area update response to the UE.

Herein, the tracking area update response may be a tracking area accept message (TAU accept message).

In an optional embodiment, schemes similar to steps S1000 to S1003 may be applied to the 5GS, and at this time the tracking area update process is replaced by a registration update process for the UE (e.g., the tracking area update request may be replaced by a registration update request, and the tracking area update response may be replaced by a registration update response), etc.

It should be noted that those skilled in the art can understand that the methods provided in the embodiments of the present disclosure may be performed individually or in combination with some methods in the embodiments of the present disclosure or some methods in the related arts.

As shown in FIG. 11, the embodiments of the present disclosure provide an information processing apparatus, including:
a sending module 41, configured to send request information, where the request information includes event indication information, and the event indication information is used for indicating satellite access coverage loss.

The information processing apparatus provided in the embodiment of the present disclosure may be a UE.

Herein, the event indication information is used for the core network device to determine a power-saving parameter.

In some embodiments, the core network device includes one of an AMF and an MME.

In some embodiments, the request information package is one of the following: a registration update request, a tracking area update request, and a connection release request.

The embodiments of the present disclosure provide an information processing apparatus including a sending module 41 that is configured to send, based on prediction of the satellite access coverage loss, the request information to the core network device.

The embodiments of the present disclosure provide an information processing apparatus including a receiving module that is configured to receive response information, where the response information includes a power-saving parameter; and the response message is one of the following: a registration update response, a tracking area update response, and a connection release response.

The embodiments of the present disclosure provide an information processing apparatus including a receiving module that is configured to receive a user configuration update message, where the user configuration update message includes a power-saving parameter.

As shown in FIG. 12, the embodiments of the present disclosure provide an information processing apparatus, including:
a receiving module 51, configured to obtain request information, where the request information includes event indication information, and the event indication information is used for indicating satellite access coverage loss; and
a sending module 52, configured to send the request information to a core network device.

Herein, the event indication information is used for the core network device to determine a power-saving parameter.

The information processing apparatus provided in the embodiment of the present disclosure may be an access network device.

In some embodiments, the request information package is one of the following: a registration update request, a tracking area update request, and a connection release request.

The embodiments of the present disclosure provide an information processing apparatus including a sending module 52 that is configured to send, based on prediction of the satellite access coverage loss, the request information to the core network device.

The embodiments of the present disclosure provide an information processing apparatus including a receiving module 51 that is configured to determine a connection release request, where the connection release request includes the event indication information.

The embodiments of the present disclosure provide an information processing apparatus including a receiving module 51 that is configured to receive the request information sent by a UE, where the request information includes the event indication information; and the request information is one of the following: a registration update request, a tracking area update request, and a connection release request.

The embodiments of the present disclosure provide an information processing apparatus including a receiving module 51 configured to receive response information sent by the core network device, where the response information includes a power-saving parameter; and the response information is one of the following: a registration update response, a tracking area update response, and a connection release response.

The embodiments of the present disclosure provide an information processing apparatus including a sending module 52 that is configured to send response information to a UE, where the response information includes a power-saving parameter.

The embodiments of the present disclosure provide an information processing apparatus, including
a receiving module 51, configured to receive a user configuration update message sent by the core network device, where the user configuration update message includes a power-saving parameter; and
a sending module 52, configured to send the user configuration update message to a UE.

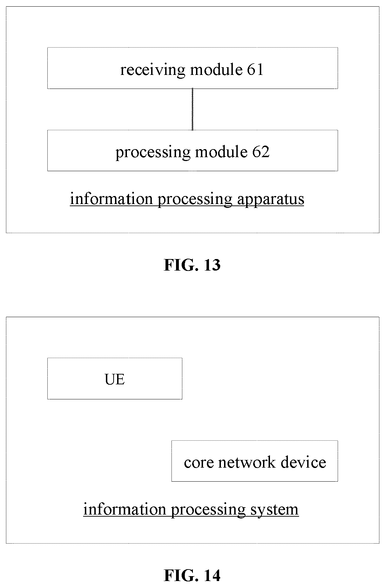

As shown in FIG. 13, the embodiments of the present disclosure provide an information processing apparatus, including:
a receiving module 61, configured to receive request information sent by a UE, where the request information includes event indication information, and the event indication information is used for indicating satellite access coverage loss; and
a processing module 62, configured to determine a power-saving parameter based on the event indication information.

The information processing apparatus provided in the embodiment of the present disclosure may be a core network device. The core network device may be an AMF or an MME.

In some embodiments, the request information is one of the following: a registration update request, a tracking area update request, and a connection release request.

The embodiments of the present disclosure provide an information processing apparatus including a processing module that is configured to determine the power-saving parameter based on satellite coverage information and/or information about location where the UE is located.

The embodiments of the present disclosure provide an information processing apparatus including a sending module configured to send response information, where the response information includes the power-saving parameter; and the response message is one of the following: a registration update response, a tracking area update response, and a connection release response.

The embodiments of the present disclosure provide an information processing apparatus including a sending module that is configured to send a user configuration update message, where the user configuration update message includes the power-saving parameter.

As shown in FIG. 14, the embodiments of the present disclosure provide an information processing system including a UE and a core network device. The UE is configured to perform the information processing method applied to a UE. The access network device is configured to perform the information processing method applied to an access network device. The core network device is configured to perform the information processing method applied to a core network device.

It should be noted that those skilled in the art can understand that the apparatus provided in the embodiments of the present disclosure may be performed individually or in combination with some apparatuses in the embodiments of the present disclosure or some apparatuses in the related arts.

With respect to the apparatus in the above embodiments, the specific manner in which each module performs an operation has been described in detail in the embodiments relating to the method, and will not be described in detail herein.

The embodiments of the present disclosure provide a communication device, including:
a processor; and
a memory, configured to store an executable instruction of the processor;
where the processor, when running the executable instruction, is configured to implement the information processing method of any embodiment of the present disclosure.

In an embodiment, the communication device may include, but is not limited to, at least one of the following: a UE, an access network device and/or a core network device. The core network device may be an AMF, an MME or an SMF.

In some embodiments, the processor may include various types of storage media, where the storage media are non-transitory computer storage media capable of continuing to memorize information stored therein after the user device is powered down.

The processor may be connected to the memory via a bus or the like for reading an executable program stored in the memory, for example, at least one of the methods shown in FIGS. 2 to 10.

The embodiments of the present disclosure also provide a computer storage medium, where the computer storage medium stores a computer-executable program. The executable program, when executed by a processor, implements the information processing method of any embodiment of the present disclosure, for example, at least one of the methods shown in FIGS. 2 to 10.

With respect to the apparatus or storage medium in the above embodiments, the specific manner in which each module performs an operation has been described in detail in the embodiments relating to the method, and will not be described in detail herein.

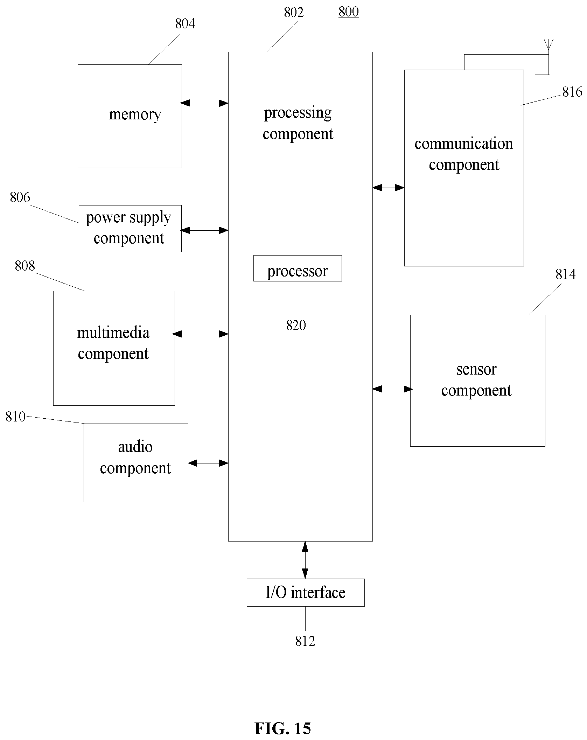

FIG. 15 is a block diagram of a UE 800 illustrated according to an exemplary embodiment. For example, the UE 800 may be a mobile phone, a computer, a digital broadcast user device, a message transceiver device, a game console, a tablet device, a medical device, a fitness device, or a personal digital assistant, etc.

Referring to FIG. 15, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the UE 800, such as operations associated with display, telephone calls, data communication, camera operations, and recording operations. The processing component 802 may include one or more processors 820 to execute an instruction to complete all or part of the steps of the method described above. In addition, the processing component 802 may include one or more modules that facilitate interaction between the processing component 802 and other components. For example, the processing component 802 may include a multimedia module to facilitate interaction between the multimedia component 808 and the processing component 802.

The memory 804 is configured to store various types of data to support the operations on the UE 800. Examples of such data include the following: an instruction of any application program or method operated on the UE 800, contact data, phonebook data, messages, pictures, videos, etc. The memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 806 supplies power to various components of the UE 800. The power supply component 806 may include a power supply management system, one or more power supplies, and other components associated with generating, managing and distributing power for the UE 800.

The multimedia component 808 includes a screen that provides an output interface between the UE 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 808 includes a front-facing camera and/or a rear-facing camera. The front-facing camera and/or the rear-facing camera may receive external multimedia data when the UE 800 is in an operating mode, such as a shooting mode or a video mode. Each of the front-facing camera and the rear-facing camera may be a fixed optical lens system or have a focal length and optical zoom capability.

The audio component 810 is configured to output and/or input audio signals. For example, the audio component 810 includes a microphone (MIC) configured to receive external audio signals when the UE 800 is in an operating mode, such as a calling mode, a recording mode and a voice recognition mode. The received audio signals may be further stored in the memory 804 or sent via the communication component 816. In some embodiments, the audio component 810 further includes a speaker for outputting the audio signals.

The I/O interface 812 provides an interface between the processing component 802 and a peripheral interface module, and the peripheral interface module described above may be a keypad, a click wheel, a button, etc. These buttons may include, but are not limited to, a home button, a volume button, a start button, and a lock button.

The sensor component 814 includes one or more sensors configured to provide state assessment of various aspects of the UE 800. For example, the sensor component 814 may detect an open/closed state of the device 800, and relative positioning of the components, for example, the components are the display and small keypad of the UE 800. The sensor component 814 may also detect a change in the position of the UE 800 or a change in the position of a component of the UE 800, the presence or absence of contact between the user and the UE 800, the orientation or acceleration/deceleration of the UE 800, and temperature changes of the UE 800. The sensor component 814 may include a proximity sensor that is configured to detect the presence of nearby objects in the absence of any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate the communication between the UE 800 and other devices in wired or wireless manners. The UE 800 may access a wireless network based on a communication standard, such as WiFi, 4G, 5G, or a combination thereof. In an exemplary embodiment, the communication component 816 receives broadcast signals or broadcast related information from an external broadcast management system via a broadcast channel. In an exemplary embodiment, the communication component 816 further includes a near-field communication (NFC) module to facilitate short-range communication. For example, the NFC module may be implemented based on the radio frequency identification (RFID) technology, the infrared data association (IrDA) technology, the ultra-wideband (UWB) technology, the Bluetooth (BT) technology, or other technologies.

In an exemplary embodiment, the UE 800 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, to perform the method described above.

In an exemplary embodiment, a non-transitory computer-readable storage medium including an instruction is provided, such as the memory 804 including an instruction. The instruction described above is capable of being executed by the processor 820 of the UE 800 to complete the method described above. For example, the non-transitory computer-readable storage medium may be an ROM, a random access memory (RAM), a CD-ROM, a magnetic tape, a floppy disk, or an optical data storage device.

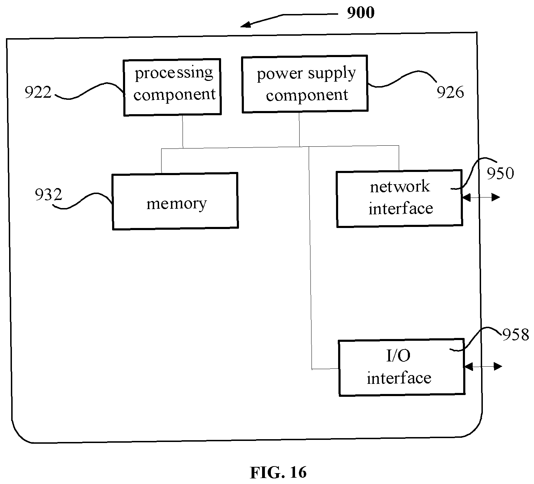

As shown in FIG. 16, an embodiment of the present disclosure illustrates a structure of a base station. For example, the base station 900 may be provided as a network side device. Referring to FIG. 16, the base station 900 includes a processing component 922, where the processing component 922 further includes one or more processors, and a memory resource represented by a memory 932 for storing an instruction, such as an application program, that is executable by the processing component 922. The application program stored in the memory 932 may include one or more modules each corresponding to a set of instructions. In addition, the processing component 922 is configured to execute the instruction to perform any method described above applied to the base station.

The base station 900 may further include a power supply component 926 configured to perform power management of the base station 900, a wired or wireless network interface 950 configured to connect the base station 900 to the network, and an I/O interface 958. The base station 900 may operate an operating system stored in the memory 932, such as Windows Server TM, Mac OS XTM, UnixTM, LinuxTM, FreeBSDTM, or the like.

After considering the specification and practicing the invention disclosed herein, those skilled in the art will easily come up with other implementation solutions of the present invention. The present disclosure is intended to cover any variations, uses or adaptive changes of the present invention, and the variations, uses or adaptive changes follow the general principles of the present invention and include common knowledge or commonly used technical means in the technical field that is not disclosed in the present disclosure. The specification and embodiments are only considered to be exemplary, and the true scope and spirit of the present invention are indicated by the following claims.

It should be understood that the present invention is not limited to the precise structure which has been described above and illustrated in the accompanying drawings, and that various modifications and alterations may be made without departing from the scope of the present invention. The scope of the present invention is limited only by the appended claims

## Claims

1. An information processing method, performed by a user equipment (UE), comprising:
sending request information to a core network device, wherein the request information comprises event indication information, and the event indication information is used for indicating satellite access coverage loss.

2. The method according to claim 1, wherein the request information is one of:
a registration update request;
a tracking area update request; and
a connection release request.

3. The method according to claim 1 or 2, wherein the sending the request information to the core network device comprises:
sending, based on prediction of the satellite access coverage loss, the request information to the core network device.

4. The method according to any one of claims 1 to 3, wherein the method comprises:
receiving response information sent by the core network device, wherein the response information comprises a power-saving parameter; wherein
the response information is one of:
a registration update response;
a tracking area update response; and
a connection release response.

5. The method according to any one of claims 1 to 3, wherein the method further comprises:
receiving a user configuration update message sent by the core network device, wherein the user configuration update message comprises a power-saving parameter.

6. The method according to any one of claims 1 to 5, wherein the core network device is an access and mobility management function (AMF) or a mobility management entity (MME).

7. An information processing method, performed by an access network device, comprising:
obtaining request information, wherein the request information comprises event indication information, and the event indication information is used for indicating satellite access coverage loss; and
sending the request information to a core network device.

8. The method according to claim 7, wherein the obtaining the request information comprises:
generating the request information; or
receiving the request information sent by a user equipment (UE).

9. The method according to claim 7 or 8, wherein the request information is a connection release request.

10. The method according to claim 7 or 8, wherein the sending the request information to the core network device comprises:
sending, based on prediction of the satellite access coverage loss, the request information to the core network device.

11. The method according to any one of claims 7 to 10, wherein the method comprises:
receiving response information sent by the core network device, wherein the response information comprises a power-saving parameter, and the response information is a connection release response.

12. The method according to claim 11, wherein the method comprises:
sending the response information to a UE.

13. The method according to any one of claims 7 to 10, wherein the method comprises:
receiving a user configuration update message sent by the core network device, wherein the user configuration update message comprises a power-saving parameter; and
sending the user configuration update message to a UE.

14. The method according to any one of claims 7 to 13, wherein the core network device is an access and mobility management function (AMF) or a mobility management entity (MME).

15. An information processing method, performed by a core network device, comprising:
receiving request information sent by a user equipment (UE), wherein the request information comprises event indication information, and the event indication information is used for indicating satellite access coverage loss; and
determining a power-saving parameter based on the event indication information.

16. The method according to claim 15, wherein the request information is one of:
a registration update request;
a tracking area update request; and
a connection release request.

17. The method according to claim 15 or 16, wherein the method comprises:
sending response information to the UE, wherein the response information comprises the power-saving parameter; wherein
the response information is one of:
a registration update response;
a tracking area update response; and
a connection release response.

18. The method according to claim 15 to 16, wherein the method comprises:
sending a user configuration update message to the UE, wherein the user configuration update message comprises the power-saving parameter.

19. The method according to any one of claims 15 to 18, wherein the core network device is an access and mobility management function (AMF) or a mobility management entity (MME).

20. An information processing apparatus, wherein the apparatus comprises:
a sending module, configured to send request information to a core network device, wherein the request information comprises event indication information, and the event indication information is used for indicating satellite access coverage loss.

21. An information processing apparatus, wherein the apparatus comprises:
a receiving module, configured to obtain request information, wherein the request information comprises event indication information, and the event indication information is used for indicating satellite access coverage loss; and
a sending module, configured to send the request information to a core network device.

22. An information processing apparatus, wherein the apparatus comprises:
a receiving module, configured to receive request information sent by a user equipment (UE), wherein the request information comprises event indication information, and the event indication information is used for indicating satellite access coverage loss; and
a processing module, configured to determine a power-saving parameter based on the event indication information.

23. A communication device, wherein the communication device comprises:
a processor; and
a memory, configured to store an executable instruction of the processor; wherein
the processor, when running the executable instruction, is configured to implement the information processing method according to any one of claims 1 to 6, or claims 7 to 14, or claims 15 to 19.

24. A computer storage medium, wherein the computer storage medium stores an executable program of a computer, and the executable program, when executed by a processor, implements the information processing method according to any one of claims 1 to 6, or claims 7 to 14, or claims 15 to 19.

25. An information processing system, comprising a user equipment (UE), an access network device and a core network device; wherein
the UE is configured to perform the method according to any one of claims 1 to 6;
the access network device is configured to perform the method according to any one of claims 7 to 14; and
the core network device is configured to perform the method according to any one of claims 15 to 19.
